# EUROPÄISCHE PATENTSCHRIFT

(11) **EP 3 061 732 B1**
(45) Veröffentlichungstag und Bekanntmachung des Hinweises auf die Patenterteilung: **28.07.2021**
(21) Anmeldenummer: 16153867.3
(22) Anmeldetag: 02.02.2016
(51) Int. Cl.: C03C 17/23, B23K 26/00, H05B 6/12, B23K 26/362, F24C 15/10

(54) **BESCHICHTETER GLAS- ODER GLASKERAMIKARTIKEL**
COATED GLASS OR GLASS-CERAMIC ARTICLES
ARTICLE EN VITROCERAMIQUE OU EN VERRE REVETU

(30) Priorität: 26.02.2015 DE 102015102743
(43) Veröffentlichungstag der Anmeldung: 31.08.2016
(73) Patentinhaber: Schott AG, 55122 Mainz (DE)
(72) Erfinder: WALDSCHMIDT, Holger, 55234 Nieder-Wiesen (DE); WAGNER, Fabian, 55118 Mainz (DE)
(74) Vertreter: Blumbach · Zinngrebe Patentanwälte PartG mbB

(56) Entgegenhaltungen:
- WO-A1-99/25562
- WO-A1-2013/084120
- WO-A2-03/020527
- None

## Beschreibung

Die Erfindung betrifft allgemein Glas- oder Glaskeramikartikel, welche mit einer blickdichten Beschichtung versehen sind. Insbesondere betrifft die Erfindung derartige Artikel, die mit leuchtenden Anzeigeelementen versehen oder für eine Ausstattung mit leuchtenden Anzeigeelementen vorgesehen sind.

Aus dem Stand der Technik sind Glaskeramik-Kochfelder bekannt, die auf ihrer Unterseite beschichtet sind, um die Anmutung zu ändern, sowie auch, um unter der Glaskeramik verbaute Teile des Herdes zu verbergen.

Eine Möglichkeit hierzu sind Sol-Gel-Beschichtungen. Diese sind recht temperaturbeständig und zeichnen sich auch durch eine gute Haftung an der Glaskeramik-Platte aus. Um die inneren Teile eines Herdes zu verdecken, werden typischerweise opake Beschichtungen verwendet.

Für einige Anwendungen ist es dabei wünschenswert, wenn die Beschichtung nicht vollflächig ist, sondern Fenster aufweist. Solche Fenster werden insbesondere vor leuchtenden Anzeigeelementen angeordnet, so dass diese Anzeigeelemente durch die Glaskeramikplatte hindurch leuchten und für einen Bediener, welcher die Nutzseite des Kochfelds betrachtet, sichtbar ist. Teilweise werden diese Fenster durch transluzente Beschichtungen abgedeckt, um den ästhetischen Eindruck zu verbessern. Bei gleichem Farbton wird dadurch eine homogene Fläche erzeugt.

Bei Kochfeldern werden heute mittels Siebdruck Symbole, Zeichen oder sonstige Logos und Designs gedruckt. Allerdings ist es hier schwierig, sehr feine Strukturen, wie beispielsweise dünne Linien zu erzeugen.

Außerdem ist durch den Siebdruck in sehr feinen Bereichen oder Ausläufen von Linien die Reproduzierbarkeit aufgrund des Siebdruckgewebes erschwert. Des Weiteren ist für jede neue Produktanfrage/Designänderung die Anfertigung eines neuen Siebes nötig, wodurch Rüstkosten sehr hoch sind, was sich gerade bei kleinen Serien stark bemerkbar macht. Das Herstellen von individuellen Designs für jeden Endkunden ist daher teuer.

Bei mehrschichtigen Beschichtungen besteht zudem bei einer Drucktechnik wie dem Siebdrucken das Problem, dass eine deckungsgleiche Strukturierung hier schwierig ist. Daher wird bei mehrschichtigen Beschichtungen hier üblicherweise ein größeres Fenster in einer der Beschichtungslagen freigelassen und eine weitere Beschichtungslage im Bereich des Fensters genauer mit dem gewünschten Muster zu strukturieren. Das Fenster kann aber insbesondere bei leuchtenden Anzeigeelementen sichtbar sein, wenn die genauer strukturierte Beschichtungslage nicht vollständig lichtundurchlässig ist.

Die EP 0868960 B1 schlägt ein Verfahren zur Herstellung von Steuerpultschildern, insbesondere für elektrische Haushaltsgeräte vor, bei welchem mindestens eine personalisierte Lasergravur auf mindestens einem Siebdruck hergestellt wird, welcher bereits auf einen Basis-Schildrohling aus Glas aufgebracht wurde, indem man durch Materialabnahme Dekore, Symbole oder entsprechende Zeichen in der Siebdruck-Schicht anbringt und indem man danach diese Gravuren durch manuelles oder automatisiertes Aufbringen mit einer Schicht unterschiedlicher Farbe überdeckt, was unmittelbar nach dem Gravurschritt oder in einem getrennten Arbeitsgang erfolgen kann.

Die WO 2013/084120 A1 beschreibt eine Platteneinheit eines Kochfelds mit zumindest einem Grundkörper und zumindest einer Beschichtung, die in zumindest einem Teilbereich zumindest einer Seite des Grundkörpers angeordnet ist. Die Beschichtung soll einen keramischen Anschein zu erwecken. Wünschenswert im Hinblick auf die Gestaltung wäre es insbesondere auch, wenn die Fenster in der Beschichtung, welche das Licht von Anzeigeelementen hindurchlassen, optisch möglichst unauffällig sind. Ideal wäre eine homogen erscheinende Fläche, bei welcher die Anzeigeelemente im ausgeschalteten Zustand unsichtbar sind.

Aufgabe der Erfindung ist es daher, einen Glas- oder Glaskeramikartikel bereitzustellen, der für einen Betrachter blickdicht ist oder zumindest blickdichte Bereiche aufweist, aber dennoch Licht von Anzeigeelementen deutlich sichtbar passieren lässt. Mit anderen Worten wird mittels der Erfindung ein sogenannter "Dead-Front-Effekt" angestrebt, bei welchem die Anzeigeelemente oder die darzustellenden Symbole im ausgeschalteten Zustand für die Bedienperson nicht sichtbar sind.

Diese Aufgabe wird durch den Gegenstand der unabhängigen Ansprüche gelöst. Vorteilhafte Weiterbildungen der Erfindung sind in den jeweiligen abhängigen Ansprüchen angegeben.

Demgemäß sieht die Erfindung einen Glas- oder Glaskeramikartikel, mit
- einem flächigen Glas- oder Glaskeramiksubstrat mit zwei gegenüberliegenden Seitenflächen vor, welches
- im sichtbaren Spektralbereich von 380 nm bis 780 nm eine Lichttransmission τᵥᵢₛ von mindestens 1% , bevorzugt mindestens 30% für sichtbares Licht aufweist, welches das Glas- oder Glaskeramiksubstrat von einer Seitenfläche zur gegenüberliegenden Seitenfläche durchquert, wobei
- eine Seitenfläche des Glas- oder Glaskeramiksubstrats mit einer Beschichtung versehen ist, welche im sichtbaren Spektralbereich von 380 nm bis 780 nm eine Lichttransmission τᵥᵢₛ von höchstens 5% aufweist, und wobei eine linienförmige Öffnung in der Beschichtung vorhanden ist, welche den Durchtritt von auf die Oberfläche der Beschichtung auftreffendem Licht durch die Beschichtung und das Glas- oder Glaskeramiksubstrat gestattet, wobei die Öffnung eine Breite von höchstens 25 µm aufweist, und wobei die Breite mindestens 0,5 µm beträgt.

Durch die geringe Transmission von höchstens 5% ist die Beschichtung blickdicht.

Ein solcher Glas- oder Glaskeramikartikel wird hergestellt, indem
- ein flächiges Glas- oder Glaskeramiksubstrat mit zwei gegenüberliegenden Seitenflächen bereitgestellt wird, welches
- im sichtbaren Spektralbereich von 380 nm bis 780 nm eine Lichttransmission τᵥᵢₛ von mindestens 1%, bevorzugt mindestens 30% für sichtbares Licht aufweist, welches das Glas- oder Glaskeramiksubstrat von einer Seitenfläche zur gegenüberliegenden Seitenfläche durchquert, wobei
- eine Seitenfläche des Glas- oder Glaskeramiksubstrats mit einer blickdichten Beschichtung versehen wird, welche im sichtbaren Spektralbereich von 380 nm bis 780 nm eine Lichttransmission τᵥᵢₛ von höchstens 5% aufweist, wobei
- ein gepulster Laserstrahl auf die blickdichte Beschichtung gerichtet und durch Ablation die Beschichtung lokal bis zur Oberfläche des Glas- oder Glaskeramikartikels entfernt und damit eine Öffnung in der blickdichten Beschichtung hergestellt wird, wobei die Öffnung am Glas- oder Glaskeramiksubstrat, beziehungsweise substratseitig Breite von höchstens 25 µm aufweist, und wobei die Breite mindestens 0,5 µm beträgt. Vorzugsweise ist die blickdichte Beschichtung dabei direkt auf dem Substrat aufgebracht. Denkbar ist aber auch, dass eine Zwischenschicht zwischen Substrat und Beschichtung vorhanden ist, etwa um die Haftung der blickdichten Beschichtung auf dem Substrat zu verbessern.

Die Lichttransmission τᵥᵢₛ kann mit einer Normlichtquelle D65 gemäß DIN EN 410 bestimmt werden.

Die Breite der Öffnung ist so gering, dass die Öffnung für einen Betrachter visuell unauffällig ist, solange keine Lichtquelle auf der der Betrachtungsseite gegenüberliegenden Seite eingeschaltet wird. Sofern die Öffnung überhaupt noch mit bloßem Auge erkennbar ist, überwiegen bei der genannten Breite und der Obergrenze der Transmission der Beschichtung Reflexionen des Umgebungslichts an der Oberfläche des Substrats, sowie an der Grenzfläche zur blickdichten Beschichtung. Andererseits sinkt mit abnehmender Breite der Öffnung auch deren Lichttransmission. Um noch gut wahrnehmbare hinterleuchtete Anzeigeelemente zu schaffen, beträgt die Breite der Öffnung am Glas- oder Glaskeramiksubstrat mindestens 0,5 µm.

Wird aber eine ansonsten durch die blickdichte Beschichtung dem Betrachter verborgene Lichtquelle eingeschaltet, so ist das durch die Öffnung hindurchtretende Licht für den Betrachter deutlich sichtbar. Überraschend ist hierbei auch, dass durch den hohen Kontrast des hindurchtretenden Lichts zur ansonsten aufgrund der Lichtundurchlässigkeit dunkler erscheinenden Oberfläche die Konturen der Öffnung überstrahlt werden und das durch die Öffnung geschaffene Strukturelement eine scheinbar größere Breite aufweist, als die tatsächliche Breite von höchstens 80 pm, vorzugsweise 40 µm oder weniger, besonders bevorzugt höchstens 25 µm. Dass die Strukturen im Durchlicht größer, beziehungsweise breiter erscheinen, kann ebenfalls auch an Beugungseffekten liegen, die aufgrund der geringen Breite entstehen. Gemäß noch einer Ausführungsform kann auch eine Helligkeitssteuerung für das zur Beleuchtung vorgesehene Leuchtelement vorgesehen sein. Mit einer solchen Helligkeitssteuerung kann die scheinbare Breite des Anzeigeelements, aber auch ein bestimmter Wert, wie beispielsweise die Heizstufe eines Kochfelds signalisiert werden.

Die Erfindung wird nachfolgend genauer anhand der beigeschlossenen Figuren beschrieben. In den Figuren verweisen gleiche Bezugszeichen auf gleiche oder entsprechende Elemente. Es zeigen:
Fig. 1 einen beschichteten Glas- oder Glaskeramikartikel,
Fig. 2 eine Vorrichtung zur Laserablation für die Herstellung eines erfindungsgemäßen Glas- oder Glaskeramikartikels,
Fig. 3 einen mit dem Verfahren hergestellten Glas- oder Glaskeramikartikel,
Fig. 4 ein Glaskeramik-Kochfeld mit einem erfindungsgemäßen Glaskeramikartikel als Kochplatte,
Fig. 5 eine Ausführungsform mit einem seitenemittierenden Lichtleiter zur Beleuchtung der Öffnung, und
Fig. 6 eine Weiterbildung der in Fig. 3 dargestellten Ausführungsform.

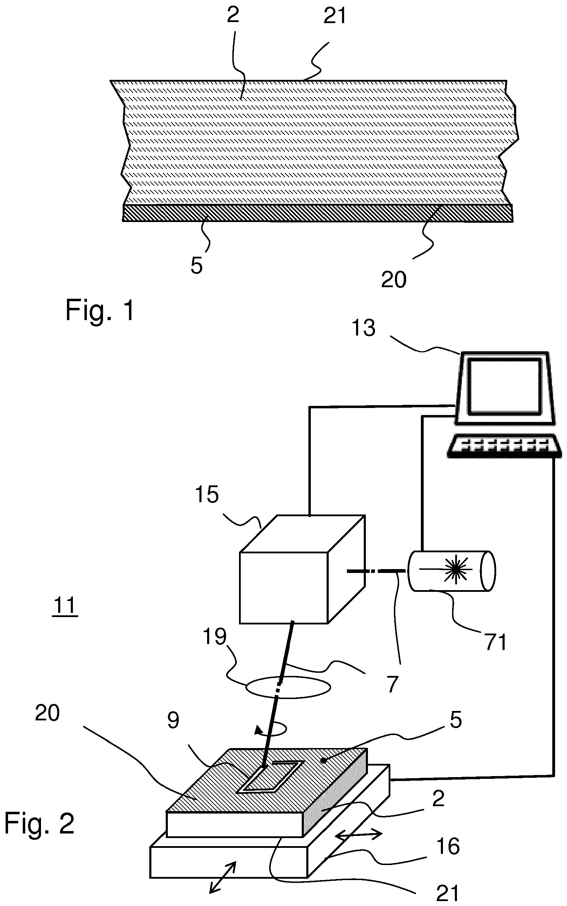

Um einen erfindungsgemäßen Glas- oder Glaskeramikartikel herzustellen, wird zunächst ein flächiges, beziehungsweise scheibenförmiges Glas- oder Glaskeramiksubstrat 2 bereitgestellt. Das Glas- oder Glaskeramiksubstrat 2 weist demgemäß zwei gegenüberliegende Seitenflächen 20, 21 auf. Eine der Seitenflächen, im in Fig. 1 gezeigten Beispiel die Seitenfläche 20 wird mit einer blickdichten oder lichtundurchlässigen Beschichtung 5 versehen.

Besonders bevorzugte Beschichtungen 5 sind anorganische und/oder anorganisch-organisch modifizierte Sol-Gel-Schichten, die ein oxidisches Netzwerk ausbilden und Dekorpigmente enthalten, beziehungsweise nach dem Aushärten eine Matrix eines solchen oxidischen Netzwerks mit darin eingebetteten Dekorpigmenten bilden. Ganz besonders bevorzugt als oxidische Netzwerke werden SiO₂-Netzwerke, beziehungsweise eine SiO₂-Matrix. Gegebenenfalls können im Netzwerk noch organische Reste vorhanden sein. Die Beschichtung 5 ist anorganisch oder zumindest überwiegend anorganisch. Auch die Dekorpigmente sind vorzugsweise anorganisch.

Derartige Beschichtungen sind sehr haltbar und temperaturbeständig und lassen sich je nach Wahl der Dekorpigmente in einer nahezu unbegrenzten Anzahl verschiedener optischer Anmutungen herstellen. Dafür stellt gerade die Strukturierung solcher Beschichtungen eine Schwierigkeit dar, insbesondere, wenn ein hoher Pigmentanteil vorhanden ist, oder die einzelnen Pigmentpartikel relativ groß sind. Letzteres ist beispielsweise der Fall, wenn plättchenförmige Dekorpigmente eingesetzt werden, um Metallic- oder Glitzereffekte hervorzurufen. Das erfindungsgemäße Verfahren kann beim Erzeugen der Öffnung hier sogar die einzelnen Pigmentpartikel durchtrennen und diese sauber schneiden.

Die Dekorpigmente und deren Menge in der Beschichtungszusammensetzung werden so ausgewählt, dass bei der vorgesehenen Schichtdicke der Beschichtung 5 deren Transmission im sichtbaren Spektralbereich kleiner als 5% ist. Gegebenenfalls kann diese niedrige Transmission auch durch eine mehrlagige Beschichtung erzielt werden.

Geeignete Beschichtungszusammensetzungen und daraus hergestellte Beschichtungen sind unter anderem aus der DE 10 2008 031 426 A1, sowie der DE 10 2008 031 428 A1 bekannt, deren Offenbarung diesbezüglich vollumfänglich auch zum Gegenstand der vorliegenden Anmeldung gemacht wird. Demnach wird in Weiterbildung der Erfindung eine blickdichte Beschichtung 5 in Form einer Versiegelungsschicht für Dekorschichten hergestellt, in dem in einem ersten Schritt die Dekorschicht mittels eines Sol-Gel-Verfahrens hergestellt wird, wobei die Schicht auf das Glas- oder Glaskeramik-Substrat aufgebracht und durch Einbrennen ausgehärtet wird, und in einem zweiten Schritt die Dekorschicht mit einer Versiegelungsschicht abgedeckt wird, die ebenfalls mittels eines Sol-Gel-Verfahrens hergestellt wird, wobei anorganische Dekorpigmente und Füllstoffe mit einem Sol vermischt werden, wobei die anorganischen Dekorpigmente plättchenförmige PigmentPartikel und anorganische Festschmierstoff-Partikel umfassen, die in einem Verhältnis im Bereich von 10:1 bis 1:1 Gew.-%, bevorzugt 5:1 bis 1:1 Gew.-% und besonders bevorzugt 3:1 bis 1,5:1 Gew.-% zugegeben werden, und die erzeugte Mischung auf das Glaskeramik-Substrat mit der ausgehärteten Dekorschicht aufgebracht und anschließend bei erhöhten Temperaturen ausgehärtet wird. Die ausgehärtete Versiegelungsschicht kann die gleiche Zusammensetzung wie die ausgehärtete Dekorschicht 5 aufweisen, mit dem Unterschied, dass das Metalloxid-Netzwerk der Versiegelungsschicht mehr, bezogen auf die Anzahl der organischen Reste vorzugsweise mindestens 5 % mehr organische Reste als das Metalloxid-Netzwerk der Dekorschicht enthält. Unter einem Metalloxid-Netzwerk wird dabei auch ein oxidisches Netzwerk mit in elementarer Form halbleitenden Elementen verstanden (insbesondere also auch das bereits erwähnte SiO₂-Netzwerk).

Anders als vorstehend beschrieben, können aber auch andere Versiegelungsschichten verwendet werden. Neben den oben beschriebenen Sol-Gel-Versiegelungsschichten eignen sich beispielsweise auch Silikonschichten oder silikonbasierte Schichten dazu, eine darunterliegende Beschichtung zu versiegeln. Gegebenenfalls können auch Kunststoffe eingesetzt werden.

Ebenso können auf der Seitenfläche keramische Farben, die speziell an die Anforderungen einer keramischen Unterseitenbeschichtung angepasst wurden, verwendet werden. Eine bevorzugte Ausführungsform dieser Erfindung sind Hybridschichten, wie in DE 10 2012 103507 A1 beschrieben.

Nach dem Herstellen der Beschichtung 5 wird nun mittels einer Vorrichtung zur Laserablation eine Öffnung 9 erzeugt. Ein Beispiel einer solchen Vorrichtung 11 zeigt Fig. 2

Die Vorrichtung zur Laserablation 11 umfasst einen Laser 71 und eine Einrichtung, um den vom Laser 71 erzeugten Laserstrahl 7 über die mit einer Beschichtung 5 beschichtete Seitenfläche 20 des Glas- oder Glaskeramiksubstrats 2 zu führen. Als Einrichtung zur Führung des Laserstrahls 7 über die Oberfläche kann beispielsweise ein Galvanometerscanner 15 verwendet werden.

Bei einigen Anwendung ist die Aussparung von langen geraden Linien gewünscht, zum Beispiel bei Kochflächen bei denen mit diesen Linien der Kochbereich abgegrenzt oder eine Kochzone markiert werden soll. Für lange, gerade Linien ist die Verwendung eines Polygonscanners von Vorteil, da es beim Stitching langer Linien schnell zu kleinem Versatz kommen kann. Durch den Versatz wird die Linie an der Übergangsstelle breiter und hat dadurch im Durchlicht den Anschein deutlich heller an dieser Stelle zu sein.

Wie in Fig. 2 dargestellt, kann alternativ oder zusätzlich zu einem Galvanometerscanner aber auch eine Einrichtung zur Bewegung des Glaskeramikelements 1 vorgesehen sein. Insbesondere eignet sich hierfür ein X-Y-Tisch 16, auch als Kreuztisch bezeichnet. Bei dieser Ausführungsform kann der Laserstrahl 7 festgehalten und die Öffnung 9 in der gewünschten Form durch Bewegen des X-Y-Tisches mit dem darauf angeordneten Glas- oder Glaskeramiksubstrat 2 in die Beschichtung 5 eingefügt werden. Um einerseits lange, homogene linienförmige Öffnungen 9 zu erzeugen und andererseits hohe Genauigkeiten beizubehalten, kann auch eine synchronisierte Scanner- und Bewegungsvorrichtung verwendet werden. Dabei wird die Bewegung des Tisches 16 oder einer anderen, das Substrat 2 bewegenden Einrichtung mit der Ablenkung des Scanners, beispielsweise dem Galvanometerscanner 15 synchronisiert.

Um den Laserstrahl 7 zur Erzielung einer möglichst hohen Intensität auf der Oberfläche zu fokussieren, kann eine geeignete Fokussierungsoptik 19 vorgesehen sein. Bei dem in Fig. 2 gezeigten Beispiel ist diese Fokussierungsoptik dem Galvanometerscanner 15 nachgeordnet. Es ist dem Fachmann ersichtlich, dass aber auch andere Konfigurationen möglich sind, die geeignet sind, den Laserstrahl 7 auf das Glaskeramikelement 1 zu fokussieren. Eine Anordnung der Fokussierungsoptik in Strahlrichtung hinter dem Galvanometerscanner ist günstig, um kurze Brennweiten zu erreichen. Allgemein, unabhängig vom speziellen Aufbau der Optik und Bewegungsmechanik, wie sie das Beispiel der Fig. 2 zeigt, wird eine Fokussierungsoptik, insbesondere eine Linse oder Linsengruppe oder ein fokussierender Spiegel mit einer Brennweite von weniger als 300 mm bevorzugt.

Um die Beschichtung 5 lokal zu entfernen und damit eine Öffnung 9 durch die Beschichtung 5 zu schaffen, wird der Laserstrahl 7 mit der Einrichtung zur Führung des Laserstrahls über die Oberfläche bewegt, wobei der Laser 7 so eingestellt ist, dass die Ablationsschwelle des Materials der Beschichtung 5 überschritten und damit die Beschichtung am Auftreffort entfernt wird. Dabei wird die Laserleistung jedoch so eingestellt das die Ablationsschwelle des Trägermaterials, also des Materials des Glases oder der Glaskeramik des Substrats 2 nicht erreicht wird und so nur die Beschichtung entfernt wird. Als Beispiel seien die unter den Namen Robax und Ceran Cleartrans vertriebenen Glaskeramiken genannt. Bei diesen Glaskeramiken liegt die Ablationsschwelle für eine Laserwellenlänge von 1064 nm bei etwa 5,2*10¹⁷ W/m².

Allgemein, ohne Beschränkung auf das spezielle, vorstehend diskutierte Ausführungsbeispiel ist es also vorteilhaft, wenn die Materialien des Glas- oder Glaskeramikmaterials und der blickdichten Beschichtung so gewählt sind, dass die Ablationsschwelle des Materials des Glas- oder Glaskeramiksubstrats 2 insbesondere im infraroten Spektralbereich, besonders bevorzugt bei einer Wellenlänge von 1064 nm höher ist, als die Ablationsschwelle der blickdichten Beschichtung 5.

Die Öffnung 9 ist linienförmig. Mit anderen Worten hat dann die Öffnung 9 die Gestalt eines Grabens. Eine solche Linie, beziehungsweise ein solcher Graben kann auch geschlossen, also allgemein ringförmig sein oder die Gestalt eines Rahmens haben.

Weiterhin ist es allgemein günstig, wenn die Schichtdicke der blickdichten Beschichtung nicht übermäßig groß ist.

Dies erleichtert einerseits den Abtrag mittels Laserablation. Andererseits ist dies auch günstig für die Transmission des Lichts durch die Öffnung 9 in der Beschichtung. Ist die Beschichtung zu dick, sind die Wandungen der Öffnung entsprechend lang und schlucken unnötig viel Licht. Es ist daher allgemein bevorzugt, wenn die blickdichte Beschichtung 5 eine Schichtdicke von höchstens 300 pm, besonders bevorzugt von höchstens 160 µm aufweist.

Umgekehrt sind aber auch zu dünne Beschichtungen ungünstig, insbesondere im Hinblick auf eine ausreichende Lichtblockung. Bevorzugt werden Schichtdicken von mehr als 10 pm, vorzugsweise mindestens 50 µm. Bei den vorstehenden Angaben der Mindest- und Höchstdicke handelt es sich um Mittelwerte der Schichtdicke.

Die Einrichtung zur Führung des Laserstrahls wird mittels einer Steuerungseinrichtung 13 angesteuert. Auf dieser kann beispielsweise ein Programm ablaufen, welches die Form und den Ort des Strukturelements in Steuersignale übersetzt, mit welchen der Laserstrahl 7 mittels der Einrichtung zur Führung des Laserstrahls über die Oberfläche bewegt wird.

Vorzugsweise steuert die Steuerungseinrichtung auch den Laser 7, insbesondere hinsichtlich eines An- und Abschaltens und der Laserintensität.

Gemäß einem Ausführungsbeispiel wurde ein gepulster Laser 71 gewählt, der sich ausreichend gut fokussieren lässt, um Spuren mit einer Breite von 0,02 mm abzutragen. Dies wurde mit einem Neodym-YAG-Laser mit einer Wellenlänge von 1064nm und einer Pulslänge von 10 ps erreicht. Es wurde ein Scanner mit einer Optik mit einer Brennweite von 255 mm eingesetzt. Der M²-Faktor ist kleiner als 1,4. Der Rohrstrahl hatte einen Durchmesser von 12 mm. Die mittlere Leistung W50 bei 20% betrug etwa 10 W. Andere Laser sind ebenfalls möglich. Vorteilhaft ist es aber jedenfalls, wenn die Breite der abladierten Strukturen kleiner als 0,025 mm beträgt.

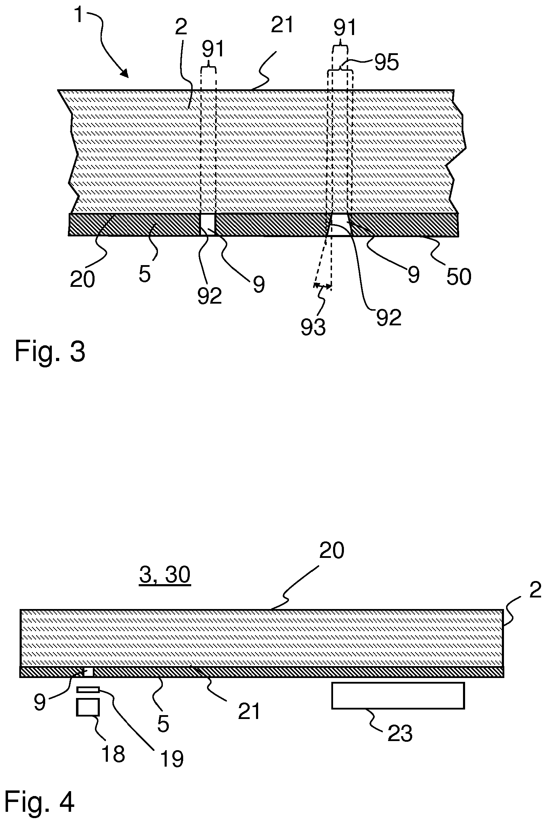

Fig. 3 zeigt schematisch im Querschnitt einen mit dem erfindungsgemäßen Verfahren hergestellten Glas- oder Glaskeramikartikel 1. In die blickdichte Beschichtung 5 ist eine Öffnung 9 eingefügt. Diese weist eine Breite 91 an der Unterseite der Beschichtung 5, beziehungsweise an der in der Öffnung freigelegten Substratoberfläche von höchstens 25 µm auf.

Bei dem in Fig. 3 links gezeigten Beispiel ist die Wandung 92 der Öffnung 9 im Wesentlichen senkrecht. Gemäß einer weiteren Ausführungsform kann sich die Öffnung 9 auch von der Oberfläche 50 der Beschichtung zum Glas- oder Glaskeramik-Substrat 2 hin verengen. Ein Ausführungsbeispiel dazu ist die in Fig. 3 auf der rechten Seite dargestellte Öffnung 9. Eine solche Ausführungsform kann günstig sein, um eine Öffnung auch in dickere Beschichtungen 5 mit mehrfacher, beziehungsweise stufenweiser Ablation einzufügen. Vorzugsweise ist der Winkel 93 der Wandung 92 der Öffnung 9 zur Senkrechten der Substratoberfläche aber kleiner als 20°, vorzugsweise kleiner als 15°. Bei diesem Winkel handelt es sich um den mittleren Winkel der Wandung. Dieser kann in einfacher Weise durch das Verhältnis der Breite 91 der Öffnung am Substrat und der Breite 95 an der Oberfläche der Beschichtung 5, sowie der Dicke der Beschichtung 5 trigonometrisch ermittelt werden. Demgemäß gilt für die Dicke D der Beschichtung 5 und der Differenz B der Breiten 95, 91 nach dieser Ausführungsform: B/2D ≤ tan(20°), vorzugsweise B/2D ≤ tan(15°).

Bei den bevorzugten Schichtdicken und der erfindungsgemäßen maximalen Breite 91 der Öffnung am Substrat ist gemäß noch einer Ausführungsform allgemein auch die Bedingung erfüllt, dass die Breite 91 der Öffnung 9 kleiner ist, als die Schichtdicke der blickdichten Beschichtung 5.

Sowohl die im Verhältnis zur Schichtdicke geringere Breite der Öffnung, als auch der allenfalls geringe Winkel der Wandung 92 zur Senkrechten bewirken, dass bei bereits leicht schräger Betrachtung der Öffnung 9 die Blickachse nicht durch die Öffnung 9 geht, sondern an der Wandung 92 endet. Dies in Verbindung mit der geringen Breite 91 der Öffnung führt dazu, das die Öffnung für einen Betrachter unsichtbar bleibt. Diese kann erst wahrgenommen werden, wenn Licht einer Lichtquelle von der für den Betrachter aufgrund der lichtblockenden Beschichtung 5 verborgenen Seite des Glas- oder Glaskeramikartikels 1 durch die Öffnung hindurchgelangt.

Bei der Laserablation kann es allerdings zu dunklen Verfärbungen der Beschichtung kommen. Ist die Beschichtung selbst dunkel, bleibt eine solche Verfärbung und damit auch die Öffnung 9 unsichtbar. Anders ist dies allerdings bei Beschichtungen mit hellem Farbton. Hier kann sich die dunkle Verfärbung an den Rändern der Öffnung 9 sichtbar abzeichnen. Dem kann begegnet werden, indem die Pulsfrequenz des Lasers und die Geschwindigkeit, mit der der Laserstrahl über die Beschichtung geführt wird, so eingestellt werden, dass die Auftreffpunkte der Laserpulse nicht überlappen. Damit kann allerdings noch keine grabenförmige Öffnung 9 erzeugt werden, da zunächst nur hintereinander aufgereihte Gruben abladiert werden. Um einen Graben zu erzeugen, wird dann der zu entfernende Bereich der Beschichtung mehrfach überfahren. Gemäß dieser Ausführungsform der Erfindung ist es damit auch möglich, für einen Betrachter unsichtbare Öffnungen auf einer blickdichten Beschichtung zu erzeugen, deren Farbe einen L-Wert im L*a*b-Farbraum von mindestens 20, bevorzugt von mindestens 40, besonders bevorzugt von mindestens 50 hat. Der L-Wert der Farbe der blickdichten Beschichtung kann beispielsweise mit einem Spektrophotometer bestimmt werden. Der Wert bezieht sich auf eine offen liegende Oberfläche der Beschichtung 5, also nicht etwa auf einen durch das Glas oder die Glaskeramik hindurch gemessenen Farbwert.

Um den thermischen Einfluss im Randbereich der zu erzeugenden Öffnung zu minimieren und so den Effekt einer Abdunkelung zu vermeiden, wird gemäß einer Weiterbildung der Erfindng ein TopHat-Profil des Laserstrahls 7 verwendet. Dabei werden die Randbereiche des zunächst Gaußförmigen Strahls eliminiert, welche zu wenig Energie zum Ablatieren der Farbe haben, jedoch noch genug Energie, um die Beschichtung so weit zu erhitzen, dass sich diese verfärbt. Ein weiterer Vorteil eines TopHat Profils ist die bessere Konturschärfe, da mit einem Gaußprofil Mehrschichtsysteme nicht konturscharf abgetragen werden, auch wenn dieser Effekt Unschärfen im Mikrometer-Bereich hervorruft, die mit dem Auge fast oder gar nicht sichtbar sind.

Besonders bevorzugt wird die Erfindung so eingesetzt, dass die Beschichtung auf der dem Benutzer abgewandten Seite 20 des Glas- oder Glaskeramiksubstrats 2 aufgebracht ist. Das Licht einer Lichtquelle passiert demnach zuerst die Beschichtung durch die Öffnung 9, dann das Glas- oder Glaskeramiksubstrat und tritt dann aus der gegenüberliegenden Seite 21 aus.

Die Erfindung lässt sich in vielfältiger Weise für hinterleuchtete Glas- oder Glaskeramikartikel von Haushaltsgeräten verwenden. Besonders geeignet ist die Erfindung hierbei für Kochfelder. Ebenfalls kann auch eine Bedienblende, etwa an einem Herd oder Backofen mit einem erfindungsgemäßen Glas- oder Glaskeramikartikel realisiert werden. Die blickdichte Beschichtung dient beim Haushaltsgerät dazu, einerseits eine bestimmte optische Anmutung zu erzeugen, andererseits auch die Komponenten des Haushaltsgerätes zu verbergen.

Allgemein, ohne Beschränkung auf die nachfolgend beschriebenen Ausführungsbeispiele betrifft die Erfindung dabei auch ein Haushaltsgerät mit einer Bedienfläche, welche durch den erfindungsgemäßen Glas- oder Glaskeramikartikel gebildet wird, wobei im Inneren des Haushaltsgeräts zumindest ein Leuchtelement angeordnet ist, so dass von diesem Leuchtelement abgestrahltes Licht auf die Öffnung 9 in der blickdichten Beschichtung 5 fällt und die Öffnung 9 und das Substrat 2 durchqueren kann.

Fig. 4 zeigt ein Beispiel einer bevorzugten Ausführungsform eines solchen Haushaltsgeräts 3 in Gestalt eines Glaskeramik-Kochfelds 30, bei welchem die Kochplatte durch einen erfindungsgemäßen Glaskeramikartikel 1 gebildet wird.

Die blickdichte Beschichtung 5 ist unabhängig von der Art des Haushaltsgeräts 3 vorzugsweise auf der die Innenseite bildenden Seite 20 des Glas- oder Glaskeramiksubstrats 2 aufgebracht. Im Beispiel des Glaskeramik-Kochfelds 30 befindet sich die blickdichte Beschichtung 5 demgemäß auf der Unterseite des Substrats, hier dementsprechend ein Glaskeramiksubstrat 2. Unter dem Glaskeramiksubstrat 2 sind ein oder mehrere Heizelemente 23 angeordnet, um auf der Kochplatte, beziehungsweise auf der Seite 21 aufgestelltes Gargut oder Kochgeschirr zu erwärmen. Beispielsweise kann es sich bei dem oder den Heizelementen 23 um Induktionsspulen für einen Induktionsherd handeln.

Ohne Beschränkung auf das dargestellte Ausführungsbeispiel wird als Leuchtelement 18 eine Leuchtdiode eingesetzt. Je nach Ausgestaltung der Öffnung kann auch eine Anordnung mehrere Leuchdioden 18 verwendet werden. Letzteres bietet sich beispielsweise an, wenn die Öffnung 9 sehr langgestreckt ist und möglichst gleichmäßig ausgeleuchtet werden soll. Um durch die kleine Öffnung viel Licht hindurchzubekommen, besteht gemäß noch einer Ausführungsform der Erfindung auch die Möglichkeit, eine Laserdiode als Leuchtelement zu verwenden.

Allgemein, ohne Beschränkung auf das dargestellte Beispiel kann es weiterhin günstig sein, wenn ein Streuelement 19 vor dem Leuchtelement 18 angeordnet wird. Das Streuelement 19 erstreckt sich entlang einer grabenförmigen ausgeführten Öffnung 9 und sorgt dafür, dass das Licht des Leuchtelements 18 gleichmäßiger entlang der grabenförmigen Öffnung 9 verteilt wird. Damit wird eine gleichmäßigere Ausleuchtung des mit einer solchen grabenförmigen Öffnung 9 erzielten linienförmigen Anzeigeelements erreicht.

Das Anzeigeelement, welches durch die beleuchtete Öffnung 9 geschaffen wird, kann beispielsweise eine Kochzonenmarkierung sein. Mit einer solchen Markierung wird angezeigt, welche der Kochzonen gerade aktiv ist und beheizt wird. Beispielsweise kann sich dazu die grabenförmige Öffnung 9 ringförmig um den durch das Heizelement 23 beheizten Bereich herum erstrecken.

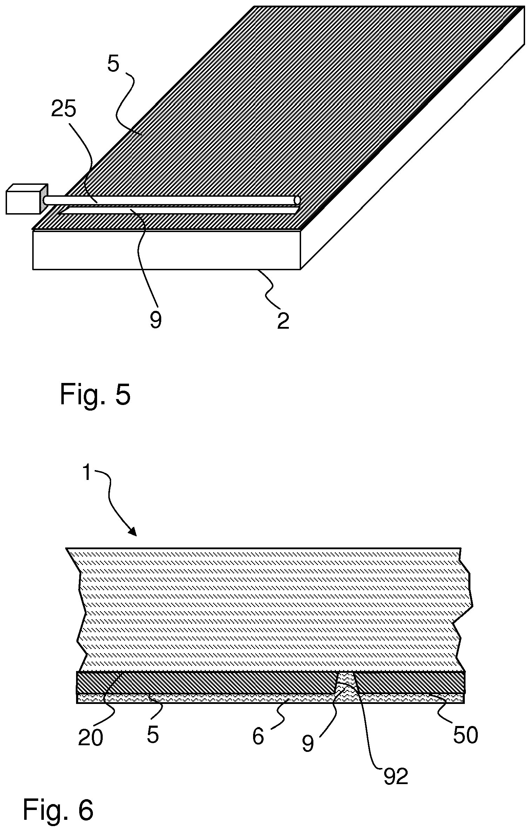

Neben einem Streuelement 19 ist auch ein seitenemittierender Lichtleiter zur Verteilung des vom Leuchtelement 18 abgestrahlten Lichts entlang der Öffnung 9 geeignet. Fig. 5 zeigt hierzu ein Beispiel. Die Öffnung 9 ist wiederum grabenförmig, so dass bei der Durchleuchtung der Öffnung 9 der Eindruck eines linienförmigen Anzeigeelements entsteht. Entlang der Öffnung 9 erstreckt sich ein seitenemittierender Lichtleiter 25. Dieser ist mit dem Leuchtelement 18 optisch gekoppelt, so dass das Licht des Leuchtelements 18 in den Lichtleiter 25 eingekoppelt wird. Der Lichtleiter 25 gibt das eingekoppelte Licht verteilt entlang seiner Längsrichtung und damit auch verteilt entlang der grabenförmigen Öffnung 9 wieder ab, so dass die Öffnung 9 gleichmäßig ausgeleuchtet wird. Für diese Ausführungsform eignet sich neben einer Leuchtdiode als Leuchtelement auch eine Laserdiode. Mit einer solchen Laserdiode kann eine hohe Lichtintensität auch in einen dünnen Lichtleiter eingekoppelt werden. Dieser kann entsprechend nahe an der Öffnung angeordnet werden, so dass das Licht effizient auf die Öffnung gerichtet werden kann. Unabhängig von der Art der Lichtquelle ist die Ausführungsform mit einer seitenemittierenden Faser auch geeignet, Licht in Bereiche zu leiten, die im Betrieb des Haushaltsgerätes stark erwärmt werden, da hier das Leuchtelement selbst nicht im aufgeheizten Bereich angeordnet sein muss. Auf diese Weise ist es unter anderem möglich, innerhalb einer Kochzone leuchtende Anzeigeelemente zu schaffen.

Allgemein kann eine Beschichtung auf einem Glas- oder Glaskeramiksubstrat nicht nur dazu dienen, die Durchsicht zu verhindern. Darüber hinaus kann eine Beschichtung auch vorteilhaft sein, um die beschichtete Seite des Substrats zu versiegeln. Im Bereich der Öffnung 9 würde eine solche Versiegelung allerdings unterbrochen. Wird eine lichtdurchlässige Versiegelungsschicht verwendet, kann diese gemäß einer Ausführungsform der Erfindung auch nach dem Einfügen der Öffnung 9 aufgebracht werden und die Öffnung abdecken oder verschließen. Das Licht des Leuchtelements kann durch die transparente Versiegelung die Öffnung 9 weiterhin passieren.

Eine solche Weiterbildung der Erfindung, bei welcher die Öffnung 9 mit einer transparenten Versiegelungsschicht 6 verschlossen ist, zeigt Fig. 6. Die Versiegelung kann die Öffnung 9 abdecken und/oder, wie dargestellt, auch auffüllen. Als Versiegelungschicht 6 eignen sich bspw. transparente Silikonschicht(en), silikonbasierte Schicht(en) oder transparente Sol-Gel-Schicht(en). Weiterhin ist es auch möglich, mit einer solchen Versiegelung ein Streuelement 18 oder einen seitenemittierenden Lichtleiter oder auch das Leuchtelement im Bereich der Öffnung zu fixieren.

Unter einer Versiegelungsschicht, wie sie die Schicht 6 darstellt, wird eine Beschichtung verstanden, welche das Glas- oder Glaskeramikmaterial und/oder die blickdichte Beschichtung 5 gegenüber Umwelteinflüssen schützt. Diese Umwelteinflüsse können beispielsweise Kondensationsprodukte sein. So sollte die Versiegelung insgesamt dicht bspw. gegenüber flüssigen und ölhaltigen Substanzen sein, wie sie beispielsweise in Lebensmitteln vorkommen. Dringen solche Stoffe in die Beschichtung 5 ein, kann es zu sichtbaren, unschönen Veränderungen der optischen Anmutung kommen.

Auch die blickdichte Beschichtung 5 selbst kann eine Versiegelungsschicht sein, um die von der Beschichtung 5 bedeckte Oberfläche des Glases oder der Glaskeramik zu schützen.

Eine weitere Anwendung neben einer im ausgeschalteten Zustand nicht sichtbaren Beleuchtung ist auch die Herstellung einer unsichtbaren Markierung, die als Kennzeichen gegenüber Plagiaten dient. Will man feststellen, ob es sich bei einem bestimmten Glas- oder Glaskeramikartikel um Originalware handelt, kann dies durch eine Begutachtung des Artikels unter rückseitiger Beleuchtung dann leicht verifiziert werden. Demgemäß ist gemäß einem Aspekt der Erfindung die Verwendung einer Markierung in Form einer erfindungsgemäß hergestellten, linienförmigen Öffnung 9 in der blickdichten Beschichtung 5 zur Herkunftskennzeichnung des Glas- oder Glaskeramikartikels.

### Bezugszeichenliste

| | |
|---|---|
| 1 | Glas- oder Glaskeramikartikel |
| 2 | Flächiges Glas- oder Glaskeramiksubstrat |
| 3 | Haushaltsgerät |
| 5 | blickdichte Beschichtung |
| 7 | Gepulster Laserstrahl |
| 9 | Öffnung in 5 |
| 11 | Vorrichtung zur Laserablation |
| 13 | Steuerungseinrichtung |
| 15 | Galvanometerscanner |
| 16 | X-Y-Tisch |
| 18 | Leuchtelement |
| 20, 21 | Seitenfläche von 2 |
| 23 | Heizelement |
| 70 | Auftreffpunkt von 7 |
| 71 | Laser |
| 15 | Galvanometerscanner |
| 20, 21 | Seitenfläche von 2 |
| 25 | Seitenemittierender Lichtleiter |
| 30 | Glaskeramik-Kochfeld |
| 70 | Auftreffpunkt von 7 |
| 91 | Breite von 9 am Substrat 2 |
| 50 | Oberfläche von 5 |
| 92 | Wandung von 9 |
| 93 | Winkel der Wandung 92 zur Senkrechten der Substratoberfläche |
| 95 | Breite der Öffnung 9 an der Oberfläche 50 von 5 |

## Patentansprüche

1. Glas- oder Glaskeramikartikel (1) mit
- einem flächigen Glas- oder Glaskeramiksubstrat (2) mit zwei gegenüberliegenden Seitenflächen (20, 21), welches
- im sichtbaren Spektralbereich von 380 nm bis 780 nm eine Lichttransmission τᵥᵢₛ von mindestens 1%, bevorzugt mindestens 30% für sichtbares Licht aufweist, welches das Glas- oder Glaskeramiksubstrat (2) von einer Seitenfläche (20, 21) zur gegenüberliegenden Seitenfläche (21, 20) durchquert, wobei
- eine Seitenfläche (20, 21) des Glas- oder Glaskeramiksubstrats (2) mit einer blickdichten Beschichtung (5) versehen ist, welche im sichtbaren Spektralbereich von 380 nm bis 780 nm eine Lichttransmission τᵥᵢₛ von höchstens 5% aufweist, und wobei eine linienförmige Öffnung (9) in der blickdichten Beschichtung (5) vorhanden ist, welche den Durchtritt von auf die Oberfläche der Beschichtung (5) auftreffendem Licht durch die Beschichtung (5) und das Glas- oder Glaskeramiksubstrat gestattet, wobei die Öffnung (9) am Glas- oder Glaskeramiksubstrat (2) eine Breite (91) von höchstens 25 µm aufweist, und wobei die Breite (91) mindestens 0,5 µm beträgt.

2. Glas- oder Glaskeramikartikel gemäß dem vorstehenden Anspruch, **dadurch gekennzeichnet, dass** die Ablationsschwelle des Materials des Glas- oder Glaskeramiksubstrats (2) im infraroten Spektralbereich, insbesondere bei einer Wellenlänge von 1064 nm höher ist, als die Ablationsschwelle der blickdichten Beschichtung (5).

3. Glas- oder Glaskeramikartikel gemäß einem der vorstehenden Ansprüche, **dadurch gekennzeichnet, dass** sich die Öffnung (9) von der Oberfläche (50) der Beschichtung (5) zum Glas- oder Glaskeramik-Substrat (2) hin verengt.

4. Glas- oder Glaskeramikartikel gemäß dem vorstehenden Anspruch, **dadurch gekennzeichnet, dass** der Winkel (93) der Wandung (92) der Öffnung (9) zur Senkrechten der Substratoberfläche kleiner als 20°, vorzugsweise kleiner als 15° ist.

5. Glas- oder Glaskeramikartikel gemäß einem der vorstehenden Ansprüche, **dadurch gekennzeichnet, dass** die Breite (91) der Öffnung (9) kleiner ist, als die Schichtdicke der blickdichten Beschichtung (5).

6. Glas- oder Glaskeramikartikel gemäß einem der vorstehenden Ansprüche, **dadurch gekennzeichnet, dass** die blickdichte Beschichtung eine Matrix eines oxidischen Netzwerks mit darin eingebetteten Dekorpigmenten umfasst.

7. Glas- oder Glaskeramikartikel gemäß einem der vorstehenden Ansprüche, **dadurch gekennzeichnet, dass** die blickdichte Beschichtung eine Farbe mit einen L-Wert im L*a*b-Farbraum von mindestens 20, bevorzugt von mindestens 40, besonders bevorzugt von mindestens 50 hat.

8. Glas- oder Glaskeramikartikel gemäß einem der vorstehenden Ansprüche, **gekennzeichnet durch** eine Versiegelung (6), welche die Öffnung (9) verschließt.

9. Haushaltsgerät (3) mit einer Bedienfläche, welche durch den Glas- oder Glaskeramikartikel (1) gemäß einem der Ansprüche 1 bis 8 gebildet wird, und wobei im Inneren des Haushaltsgeräts zumindest ein Leuchtelement angeordnet ist, so dass von diesem Leuchtelement abgestrahltes Licht auf die Öffnung (9) in der blickdichten Beschichtung (5) fällt und die Öffnung (9) und das Substrat (2) durchqueren kann.

10. Haushaltsgerät (3) gemäß dem vorstehenden Anspruch, wobei die blickdichte Beschichtung (5) auf der die Innenseite bildenden Seite (20) des Glas- oder Glaskeramiksubstrats aufgebracht ist.

11. Haushaltsgerät gemäß einem der zwei vorstehenden Ansprüche, **gekennzeichnet durch** zumindest eine Leuchtdiode oder Laserdiode als Leuchtelement (18).

12. Haushaltsgerät gemäß einem der drei vorstehenden Ansprüche, **gekennzeichnet durch** ein Streuelement (19) oder einen seitenemittierenden Lichtleiter zur Verteilung des vom Leuchtelement (18) abgestrahlten Lichts entlang der Öffnung (9).

13. Verwendung einer Markierung in Form einer linienförmigen Öffnung (9) in der blickdichten Beschichtung (5) eines Glas- oder Glaskeramikartikels (1) gemäß einem der Ansprüche 1 bis 8 zur Herkunftskennzeichnung des Glas- oder Glaskeramikartikels.

## Claims

1. A glass or glass ceramic article (1), comprising:
- a sheet-like glass or glass ceramic substrate (2) having two opposite faces (20, 21), which
- in the visible spectral range from 380 nm to 780 nm exhibits a light transmittance τᵥᵢₛ of at least 1 %, preferably at least 30% for visible light that passes through the glass or glass ceramic substrate (2) from one face (20, 21) to the opposite face (21, 20); wherein
- one face (20, 21) of the glass or glass ceramic substrate (2) is provided with an opaque coating (5) which in the visible spectral range from 380 nm to 780 nm exhibits a light transmittance τᵥᵢₛ of not more than 5 %; and wherein a linear opening (9) is provided in the opaque coating (5), which allows light that is incident on the surface of the coating (5) to pass through the coating (5) and through the glass or glass ceramic substrate; wherein said opening (9) has a width (91) of not more than 25 µm, and wherein the width (91) is at least 0.5 µm.

2. The glass or glass ceramic article according to the preceding claim, **characterised in that** in the infrared spectral range, in particular at a wavelength of 1064 nm, the ablation threshold of the material of the glass or glass ceramic substrate (2) is higher than the ablation threshold of the opaque coating (5).

3. The glass or glass ceramic article according to any one of the preceding claims, **characterised in that** the opening (9) tapers from the surface (50) of the coating (5) toward the glass or glass ceramic substrate (2).

4. The glass or glass ceramic article according to any one of the preceding claims, **characterised in that** the angle (93) enclosed by the wall (92) of the opening (9) and the surface normal of the substrate is less than 20°, preferably less than 15°.

5. The glass or glass ceramic article according to any one of the preceding claims, **characterised in that** the width (91) of the opening (9) is smaller than the layer thickness of the opaque coating (5).

6. The glass or glass ceramic article according to any one of the preceding claims, **characterised in that** the opaque coating comprises a matrix of an oxidic network with decorative pigments embedded therein.

7. The glass or glass ceramic article according to any one of the preceding claims, **characterised in that** the opaque coating has a colour with an L value in the L*a*b colour space of at least 20, preferably at least 40, most preferably at least 50.

8. The glass or glass ceramic article according to any one of the preceding claims, **characterised by** a sealing (6) closing the opening (9).

9. A household appliance (3) having an operating surface that is defined by the glass or glass ceramic article (1) according to any one of claims 1 to 8, and wherein at least one light-emitting element is arranged in the interior of the household appliance such that light emitted by said light-emitting element is incident on the opening (9) in the opaque coating (5) and can pass through the opening (9) and the substrate (2).

10. The household appliance (3) according to the preceding claim, wherein the opaque coating (5) is applied on that side (20) of the glass or glass ceramic substrate defining the inner surface thereof.

11. The household appliance according to any one of the two preceding claims, **characterised by** at least one light-emitting diode or laser diode as the light-emitting element (18).

12. The household appliance according to any one of the three preceding claims, **characterised by** a diffusing element (19) or a side-emitting light guide for distributing along the opening (9) the light emitted by the light-emitting element (18).

13. Use of a marking in the form of a linear opening (9) in the opaque coating (5) of a glass or glass ceramic article (1) according to any one of claims 1 to 8 for labelling the origin of the glass or glass ceramic article.

## Revendications

1. Article en verre ou vitrocéramique (1), comprenant
- un substrat en verre ou vitrocéramique (2) plat, doté de deux faces latérales (20, 21) situées en vis-à-vis, qui
- présente, dans le domaine spectral visible de 380 nm à 780 nm, une transmission de lumière τᵥᵢₛ d'au moins 1 %, de préférence d'au moins 30 %, pour la lumière visible qui traverse le substrat en verre ou vitrocéramique (2) depuis une face latérale (20, 21) vers l'a face latérale (21, 20) située en vis-à-vis, dans lequel
- une face latérale (20, 21) du substrat en verre ou vitrocéramique (2) est pourvue d'un revêtement (5) opaque qui présente, dans le domaine spectral visible de 380 nm à 780 nm, une transmission de lumière τᵥᵢₛ d'au maximum 5 %, et dans lequel est prévue dans le revêtement (5) opaque, une ouverture (9) linéaire qui permet le passage de la lumière arrivant sur la surface du revêtement (5), à travers le revêtement (5) et le substrat en verre ou vitrocéramique, l'ouverture (9) du substrat en verre ou vitrocéramique (2) ayant une largeur (91) d'au maximum 25 µm, et la largeur (91) étant d'au moins 0,5 µm.

2. Article en verre ou vitrocéramique selon la revendication précédente, **caractérisé en ce que** le seuil d'ablation du matériau du substrat en verre ou vitrocéramique (2) dans le domaine spectral infrarouge, notamment pour une longueur d'onde de 1 064 nm, est supérieur au seuil d'ablation du revêtement (5) opaque.

3. Article en verre ou vitrocéramique selon l'une des revendications précédentes, **caractérisé en ce que** l'ouverture (9) se rétrécit depuis la surface (50) du revêtement (5) en direction du substrat en verre ou vitrocéramique (2).

4. Article en verre ou vitrocéramique selon la revendication précédente, **caractérisé en ce que** l'angle (93) de la paroi (92) de l'ouverture (9) par rapport à la perpendiculaire de la surface du substrat est inférieur à 20°, de préférence inférieur à 15°.

5. Article en verre ou vitrocéramique selon l'une des revendications précédentes, **caractérisé en ce que** la largeur de l'ouverture (9) est inférieure à l'épaisseur de couche du revêtement (5) opaque.

6. Article en verre ou vitrocéramique selon l'une des revendications précédentes, **caractérisé en ce que** le revêtement opaque comprend une matrice d'un réseau à base d'oxydes dans lequel sont incorporés des pigments décoratifs.

7. Article en verre ou vitrocéramique selon l'une des revendications précédentes, **caractérisé en ce que** le revêtement opaque a une couleur avec une valeur L dans l'espace chromatique L*a*b* d'au moins 20, de préférence d'au moins 40, et de manière particulièrement avantageuse d'au moins 50.

8. Article en verre ou vitrocéramique selon l'une des revendications précédentes, **caractérisé en ce qu'**il présente un scellement (6) qui obture l'ouverture (9).

9. Appareil ménager (3) doté d'une surface de commande qui est constituée de l'article en verre ou vitrocéramique (1) selon l'une des revendications 1 à 8, et dans lequel au moins un élément lumineux est prévu à l'intérieur de l'appareil ménager, de sorte que la lumière émise par cet élément lumineux tombe sur l'ouverture (9) dans le revêtement (5) opaque et peut traverser l'ouverture (9) et le substrat (2).

10. Appareil ménager (3) selon la revendication précédente, dans lequel le revêtement (5) opaque est appliqué sur la face (20) du substrat en verre ou vitrocéramique qui constitue la face interne.

11. Appareil ménager selon l'une des revendications précédentes, **caractérisé en ce qu'**il présente au moins une diode électroluminescente ou une diode laser en tant qu'élément lumineux (18).

12. Appareil ménager selon l'une des trois revendications précédentes, **caractérisé en ce qu'**il présente un élément de diffusion (19) ou un guide de lumière à émission latérale, en vue de la répartition de la lumière rayonnée par l'élément lumineux (18), le long de l'ouverture (9).

13. Utilisation d'un marqueur sous la forme d'une ouverture (9) linéaire dans le revêtement (5) opaque d'un article en verre ou vitrocéramique (1) selon l'une des revendications 1 à 8, en vue du marquage de l'origine de l'article en verre ou vitrocéramique.
